# FASCICULE DE BREVET EUROPEEN

(11) **EP 3 300 973 B1**
(45) Date de publication et mention de la délivrance du brevet: **04.11.2020**
(21) Numéro de dépôt: 17193983.8
(22) Date de dépôt: 29.09.2017
(51) Int. Cl.: B60S 3/00, B60S 3/04, B05B 1/34, B08B 3/02

(54) **INSTALLATION DE LAVAGE POUR UN VÉHICULE**
REINIGUNGSANLAGE FÜR EIN FAHRZEUG
WASHING EQUIPMENT FOR A VEHICLE

(30) Priorité: 30.09.2016 FR 1659426
(43) Date de publication de la demande: 04.04.2018
(73) Titulaire: ALSTOM Transport Technologies, 93400 Saint-Ouen (FR)
(72) Inventeur: PEREIRA, Jorge, 64200 BIARRITZ (FR)
(74) Mandataire: Lavoix

(56) Documents cités:
- EP-A1- 0 140 505
- GB-A- 2 134 002
- US-A- 5 020 556
- US-A1- 2002 162 576
- US-A1- 2005 028 846
- US-A1- 2012 048 311

## Description

La présente invention concerne une installation de lavage pour un véhicule comprenant :
- au moins un portique délimitant une voie pour le véhicule,
- au moins une buse supportée par le portique et destinée à projeter un liquide de nettoyage sur le véhicule, et
- des moyens propres à créer un mouvement de rotation hélicoïdale du liquide de nettoyage par rapport au portique.

Une telle installation est notamment destinée au lavage des véhicules ferroviaires, tels que des trains ou des tramways voire éventuellement des bus.

Certaines installations de lavage utilisent un système de brossage pour nettoyer la carrosserie du véhicule. Cependant ce type de système est coûteux à entretenir du fait des pièces mobiles mises en œuvre. De plus, les brosses utilisées peuvent abîmer la carrosserie du véhicule.

Ainsi, il existe des installations de lavage sans brosse qui comportent un système de lavage muni de plusieurs buses de projection d'un liquide de nettoyage. Ces buses sont disposées sur un rotor monté rotatif par rapport à un portique. Elles sont désaxées par rapport à l'axe du rotor de sorte que lorsque le rotor tourne les buses sont en mouvement de rotation autour d'un même axe constitué de l'axe de rotation du rotor. Chaque flux en sortie de chaque buse décrit alors une hélice centrée suivant l'axe de rotation du rotor. Les flux en sortie des buses sont entrelacés telles les spires d'une bobine.

US 2005/028846 décrit une installation de lavage de l'état de la technique.

Cependant, un tel système de lavage manque de fiabilité et nécessite un entretien fréquent du rotor mobile.

L'invention a pour but de fournir un système nécessitant moins d'entretien.

A cet effet, l'invention concerne une installation de lavage du type précité, dans laquelle les moyens propres à créer un mouvement de rotation hélicoïdale sont adaptés pour assurer la rotation du liquide de nettoyage autour de l'axe du flux du liquide de nettoyage sortant de la buse.

Une installation de lavage selon l'invention peut comporter en outre l'une ou plusieurs des caractéristiques suivantes, prises seules ou selon toutes combinaisons techniquement envisageables :
- les moyens propres à créer un mouvement de rotation hélicoïdale sont situés dans un conduit de passage du liquide de nettoyage ;
- les moyens propres à créer un mouvement de rotation hélicoïdale sont situés dans la buse ;
- les moyens propres à créer un mouvement de rotation hélicoïdale comportent un profil en hélice situé sur une paroi interne d'un conduit de passage du liquide de nettoyage ;
- les moyens propres à créer un mouvement de rotation hélicoïdale comportent plusieurs profils en hélice répartis sur une circonférence de la paroi interne du conduit de passage du liquide de nettoyage ;
- les moyens propres à créer un mouvement de rotation hélicoïdale comprennent au moins une aube ;
- le portique supporte plusieurs buses espacées longitudinalement entre elles ;
- les moyens propres à créer un mouvement de rotation hélicoïdale sont agencés de sorte que les sens de rotation du liquide de nettoyage en sortie de chaque buse sont alternés entre les buses adjacentes ; et
- ladite installation de lavage comprend des moyens de mise en rotation de la buse autour d'un axe perpendiculaire à l'axe longitudinal du portique et excentré par rapport à l'axe de la buse.

D'autres aspects et avantages de l'invention apparaîtront à la lecture de la description qui suit, donnée à titre d'exemple et faite en référence aux dessins annexés, dans lesquels :
- la Figure 1 est une vue schématique en perspective d'une installation de lavage selon l'invention ;
- la Figure 2 est une vue schématique partiellement en coupe, illustrant un conduit de passage propre à créer un mouvement de rotation hélicoïdale du flux liquide sur lui-même selon un mode de réalisation ;
- la Figure 3 est une vue en perspective d'un tronçon d'un conduit de passage, illustrant les moyens propres à créer un mouvement de rotation hélicoïdale ;
- la Figure 4 est une section transversale du tronçon de la Figure 3 ;
- la Figure 5 est une vue analogue à celle de la Figure 2, selon un autre mode de réalisation ;
- la Figure 6 est une vue analogue à celle de la Figure 2, illustrant une buse propre à créer un mouvement de rotation hélicoïdale ; et
- la Figure 7 est une section transversale d'un tronçon selon un autre mode de réalisation.

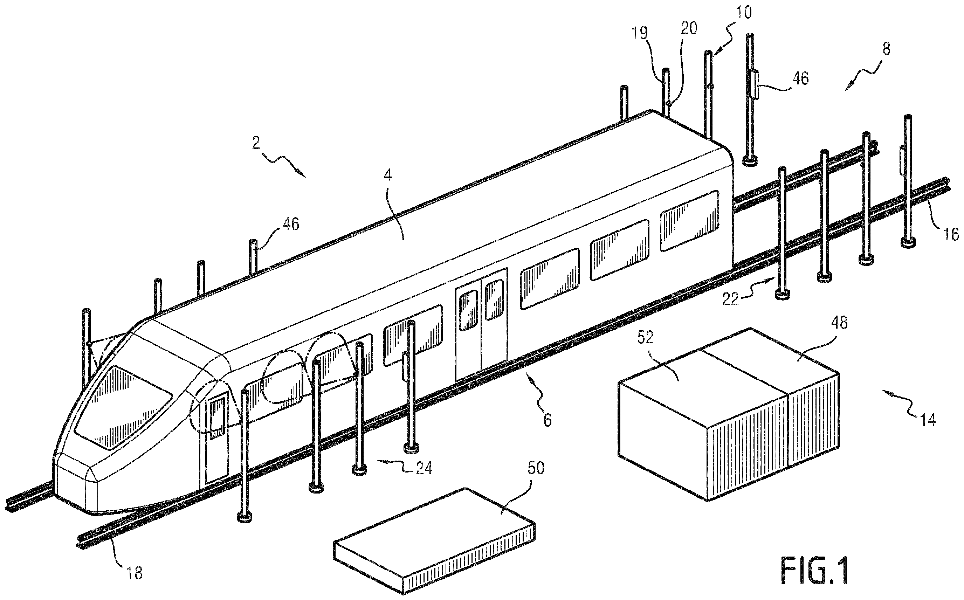

Un système de lavage 2 d'un véhicule 4 est illustré à la Figure 1.

Le véhicule 4 est un véhicule ferroviaire tel qu'un train ou un tramway.

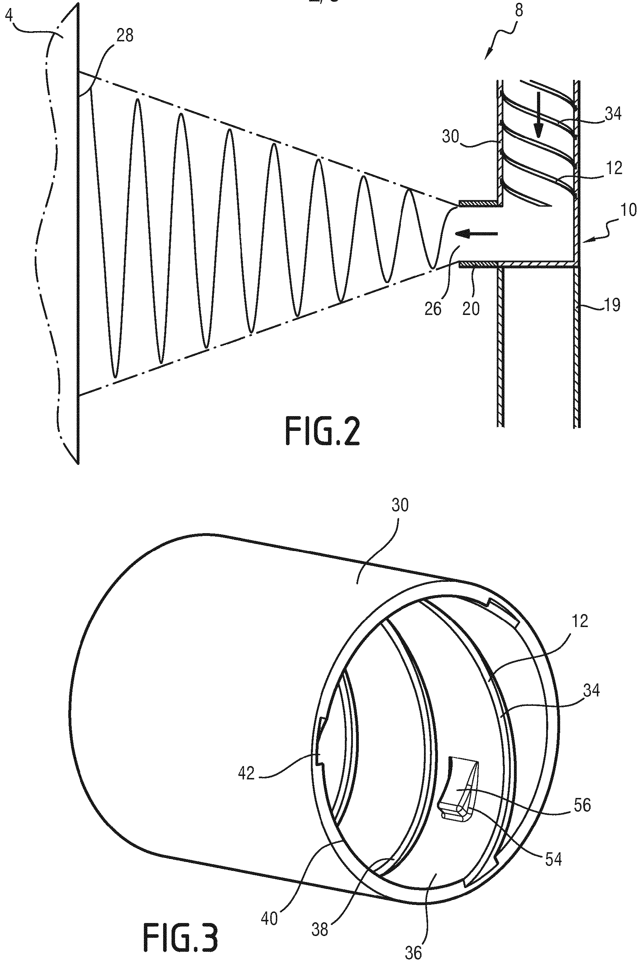

Le système de lavage 2 comporte une voie 6 sur laquelle le véhicule 4 est positionné pour être nettoyé. Le système de lavage 2 comprend en outre une installation de lavage 8 située de part et d'autre de la voie 6 et qui comporte des portiques 10 portant des moyens 12, illustrés à la Figure 2, propres à imprimer par rapport aux portiques 10 un mouvement de rotation hélicoïdale sur lui-même d'un liquide de nettoyage, et un système de gestion 14 pour contrôler le lavage du véhicule 4.

Selon le sens de déplacement du véhicule 4, la voie 6 comprend une entrée de voie 16 et une sortie de voie 18.

Chaque portique 10 comprend deux poteaux 19 verticaux situés de part et d'autre de la voie 6. Chaque poteau 19 supporte une ou plusieurs buses 20 destinées à projeter le liquide de nettoyage sur le véhicule 4.

Chaque poteau 19 est de forme générale tubulaire. Chaque poteau 19 s'étend verticalement sur la hauteur du véhicule 4 pour le nettoyage des surfaces latérales du véhicule 4.

Avantageusement chaque poteau 19 ou au moins l'un des poteaux 19 comprend une buse centrale pour le nettoyage des surfaces latérales du véhicule 4, comprise entre une buse avant dirigée vers l'avant et destinée au nettoyage d'une surface avant du véhicule 4, et une buse arrière dirigée vers l'arrière et destinée au nettoyage d'une surface arrière du véhicule 4. Les buses avant et arrière sont avantageusement orientées spécifiquement pour nettoyer les surfaces avant et arrière du véhicule 4.

Dans l'exemple illustré à la Figure 1, l'installation de lavage 8 comporte plusieurs portiques 10, situés longitudinalement de part et d'autre de la voie 6 et aux abords de celle-ci.

L'installation de lavage 8 comporte notamment des portiques de lavage 22 destinés au lavage du véhicule 4 et des portiques de rinçage 24 destinés au rinçage du véhicule 4.

Les portiques de lavage 22 et les portiques de rinçage 24 sont situés respectivement en entrée de voie 16 et en sortie de voie 18.

Les portiques de lavage 22 sont reliés à une source de liquide de nettoyage composé d'un mélange d'eau et de produits nettoyants. Les portiques de rinçage 24 sont reliés à une source d'eau de rinçage.

Comme illustrée sur la Figure 2, la buse 20 supportée par le poteau 19 du portique 10 comprend un orifice de sortie 26 s'ouvrant vers l'extérieur perpendiculairement à l'axe du poteau 19 et au travers duquel le liquide de nettoyage est projeté vers l'extérieur.

La buse 20 est placée en regard du véhicule 4 de sorte que l'orifice de sortie 26 est dirigé vers une surface 28 du véhicule 4 à nettoyer.

Comme illustrés à la Figure 3, les moyens 12 propres à créer un mouvement de rotation hélicoïdale sont situés dans un conduit de passage 30 du liquide de nettoyage.

Le conduit de passage 30 du liquide de nettoyage est situé dans le poteau 19 en amont de la buse 20, de sorte à imprimer le liquide de nettoyage d'un mouvement de rotation hélicoïdale avant sa projection à travers l'orifice de sortie 26.

Les moyens 12 propres à créer un mouvement de rotation hélicoïdale comportent un profil en hélice 34.

Le profil en hélice 34 est formé sur une paroi interne 36 du conduit de passage 30 du liquide de nettoyage.

Avantageusement, le profil en hélice 34 est réalisé par au moins une rainure hélicoïdale 38 formée sur la paroi interne 36 du conduit de passage 30 du liquide de nettoyage.

La rainure hélicoïdale 38 est par exemple réalisée par filetage d'une portion du conduit de passage 30 du liquide de nettoyage.

De manière préférentielle, le profil en hélice 34 est réalisé par au moins trois rainures hélicoïdales 38 uniformément réparties sur une circonférence 40 de la paroi interne 36 du conduit de passage 30.

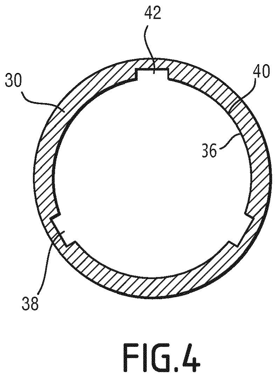

Comme représenté aux Figures 3 et 4, le profil en hélice 34 a une section rectangulaire 42.

Le liquide de nettoyage est composé d'eau, d'un mélange d'eau et de produit nettoyant ou d'un produit lessiviel spécifique adapté aux carrosseries de véhicules.

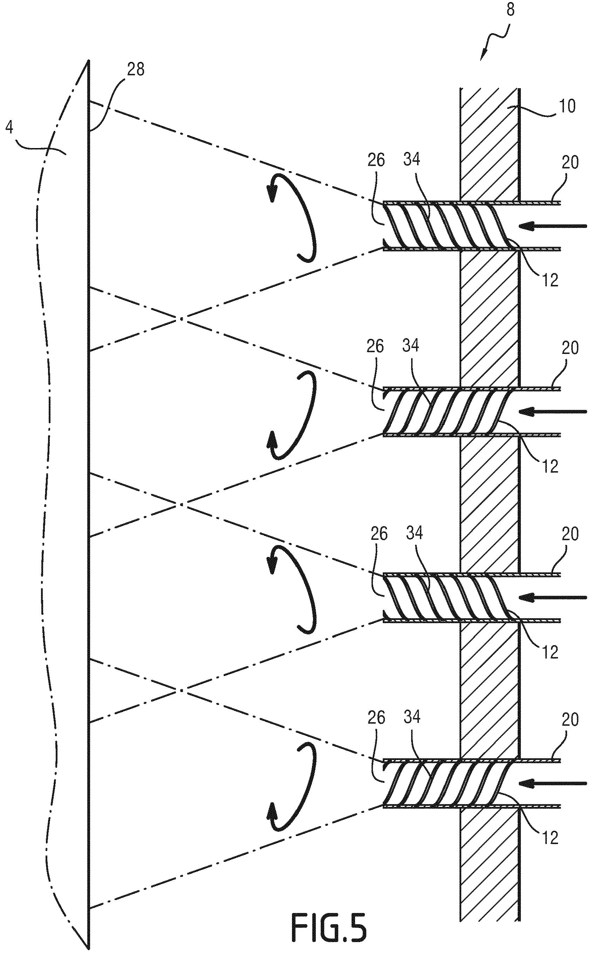

Avantageusement et comme illustré à la Figure 5, plusieurs buses 20 sont placées longitudinalement sur un même poteau 19 et sont espacées entre elles.

Les orientations des profils en hélice 34 de chacune des buses 20 sont alternées d'une buse à l'autre de sorte que les sens de rotation du liquide de nettoyage traversant l'orifice de sortie 26 de chacune des buses 20 sont alternés.

Le système de gestion 14 tel que représenté à la Figure 1 comprend un système de détection 46 du véhicule 4 qui est situé au niveau de l'entrée de voie 16 et avantageusement aussi avant les portiques de rinçage 24. Il comprend également un pupitre de commande 48, un système de décantation 50 et un système de recyclage de l'eau 52, situés en retrait de la voie 6.

Le système de détection 46 du véhicule 4 comporte par exemple des capteurs de position aptes à détecter lorsque que le véhicule 4 est en position sur la voie 6.

Le pupitre de commande 48 active la mise en oeuvre automatique de l'installation de lavage 8 lorsque le système de détection 46 détecte la présence du véhicule 4 sur la voie 6.

Le système de décantation 50 est situé le long de la voie 6. Il est propre à récupérer le liquide de nettoyage et l'eau de rinçage ayant servi pour le véhicule 4 afin d'opérer une séparation entre l'eau et les résidus en excès mélangés à l'eau.

Le système de recyclage de l'eau 52 est relié au système de décantation 50 afin de réutiliser l'eau pour d'autres cycles de lavage du véhicule 4 ou pour le lavage d'autres véhicules. Il est également conçu pour récupérer l'eau de pluie afin d'alimenter en eau l'installation de lavage. De cette manière la consommation d'eau est réduite, ce qui permet de diminuer les coûts ainsi que l'impact environnemental de l'installation de lavage 8.

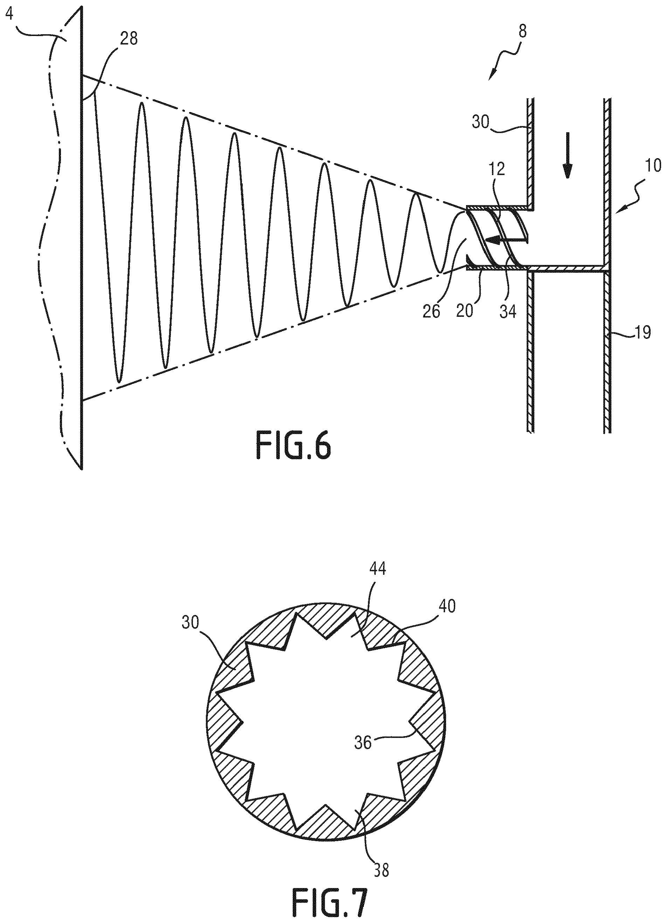

Selon une variante de réalisation, les moyens 12 propres à créer un mouvement de rotation hélicoïdale sont situés dans la buse 20, comme illustrés à la Figure 6, ou à la fois dans la buse 20 et dans le conduit de passage 30 du liquide de nettoyage.

Selon un mode de réalisation particulier, l'installation de lavage 8 comprend des moyens de mise en rotation de la buse 20 adaptés pour mettre la buse 20 en rotation autour d'un axe perpendiculaire à l'axe longitudinal du portique 10 et excentré par rapport à l'axe de la buse 20. Une telle configuration permet d'élargir la zone d'impact du liquide de nettoyage sortant de la buse 20.

Selon une variante de réalisation illustrée à la Figure 7, le profil en hélice 34 est réalisé par plus de 3 rainures hélicoïdales 38, par exemple par 12 rainures hélicoïdales 38, et chaque rainure hélicoïdale 38 a une section triangulaire 44.

Selon un autre mode de réalisation, le profil en hélice 34 est réalisé par une ou plusieurs nervures hélicoïdales. L'une ou chaque nervure est en saillie sur la paroi interne 36 du conduit de passage 30.

De façon avantageuse, les moyens 12 propres à créer un mouvement de rotation hélicoïdale comportent une ou plusieurs aube(s) 54. Une telle aube est représentée à la Figure 3.

La ou chaque aube 54 est fixe et fait saillie sur la paroi interne 36 du conduit de passage 30 du liquide de nettoyage.

La ou chaque aube 54 comprend une surface principale 56 de forme générale concave de sorte à former une rampe d'entraînement en rotation du liquide de nettoyage, et deux parois latérales parallèles entre elles.

Avantageusement, les parois latérales de chaque aube 54 s'étendent parallèlement à la direction de la rainure hélicoïdale 38.

Une méthode de lavage d'un véhicule 4 va maintenant être décrite.

Dans un premier temps, le système de détection 46 détecte un véhicule 4 en position sur l'entrée de voie 16 de la voie 6.

Ensuite, le pupitre de commande 48 de l'installation de lavage 8 active la projection du liquide de nettoyage à travers les buses 20 des portiques de lavage 22. Le liquide de nettoyage est alors composé d'un mélange d'eau et de produit nettoyant ou bien d'un produit lessiviel spécifique.

Le liquide de nettoyage passe par le conduit de passage 30 muni des moyens 12 propres à créer un mouvement de rotation hélicoïdale. Le liquide de nettoyage est alors animé d'un mouvement de rotation hélicoïdale qu'il va conserver jusqu'à sa projection à travers l'orifice de sortie 26 de la buse 20. Lorsque le liquide de nettoyage traverse le conduit de passage 30 muni des moyens 12 propres à créer un mouvement de rotation hélicoïdale, il s'anime d'un mouvement de rotation hélicoïdale et créé ainsi un effet vortex.

L'expression « effet vortex » correspond au nom donné par Schauberger au mouvement de rotation hélicoïdale dont un fluide est imprimé et qui lui permet d'emmagasiner une grande énergie cinétique.

Sous l'effet vortex, le liquide de nettoyage emmagasine une grande énergie cinétique qui lui permet de restituer une force importante sur la surface 28 du véhicule 4 à nettoyer. Les salissures présentes sur cette surface 28 sont donc facilement éliminées.

Le véhicule 4 est ensuite déplacé sur la voie 6, depuis l'entrée de voie 16 vers la sortie de voie 18.

Le pupitre de commande 48 active alors la projection d'eau de rinçage à travers les buses 20 des portiques de rinçage 24, sur la surface 28 du véhicule 4 à rincer.

L'eau utilisée dans le mélange d'eau et de produit nettoyant, tout comme celle utilisée pour rincer le véhicule 4, est acheminée depuis le système de recyclage de l'eau 52. L'eau sale, une fois utilisée, passe dans le système de décantation 50 pour être restituée au système de recyclage de l'eau 52.

Selon un autre mode de réalisation, le liquide de nettoyage est acheminé par le conduit de passage 30 jusqu'à la buse 20, cette dernière étant munie des moyens 12 propres à créer un mouvement de rotation hélicoïdale. Le liquide de nettoyage est alors animé d'un mouvement de rotation hélicoïdale juste avant sa projection à travers l'orifice de sortie 26 de la buse 20.

Eventuellement, le liquide de nettoyage passe dans un premier temps par le conduit de passage 30 équipé des moyens 12 propres à créer un mouvement de rotation hélicoïdale, puis dans un deuxième temps il passe dans la buse 20 également équipée des moyens 12 propres à créer un mouvement de rotation hélicoïdale.

Eventuellement, les portiques de lavage 22 et les portiques de rinçage 24 se confondent de sorte qu'un même portique 10 opère le lavage et le rinçage du véhicule 4. Ainsi, le véhicule 4 n'est pas déplacé sur la voie 6 avant l'étape de rinçage.

Selon une variante de réalisation, l'eau de rinçage provient d'un conduit indépendant qui ne comporte pas de moyens 12 propres à créer un mouvement de rotation hélicoïdale.

Les modes de réalisation décrits ci-dessus ne sont que des exemples. Des modifications structurelles pourraient être apportées sans changer le fonctionnement de l'installation de lavage.

L'installation de lavage décrite ci-dessus permet un lavage efficace du véhicule par effet vortex du liquide projeté sur la surface à nettoyer.

La rotation alternée des flux de liquide en sortie de buse permet notamment d'éviter une interférence entre les flux et donc une annulation des vitesses de rotation.

L'entretien d'une telle installation de lavage est peu coûteux et simplifié. De plus, une telle installation consomme peu d'eau et peu de produit nettoyant, ce qui diminue son impact sur l'environnement.

## Revendications

1. Installation de lavage (8) pour un véhicule (4), comprenant :
- au moins un portique (10) délimitant une voie (6) pour le véhicule (4),
- au moins une buse (20) supportée par le portique (10) et destinée à projeter un liquide de nettoyage sur le véhicule (4), et
- des moyens (12) propres à créer un mouvement de rotation hélicoïdale du liquide de nettoyage par rapport au portique (10),
**caractérisée en ce que** les moyens (12) propres à créer un mouvement de rotation hélicoïdale sont adaptés pour assurer la rotation du liquide de nettoyage autour de l'axe du flux du liquide de nettoyage sortant de la buse (20).

2. Installation de lavage (8) selon la revendication 1, dans laquelle les moyens (12) propres à créer un mouvement de rotation hélicoïdale sont situés dans un conduit de passage (30) du liquide de nettoyage.

3. Installation de lavage (8) selon la revendication 1 ou 2, dans laquelle les moyens (12) propres à créer un mouvement de rotation hélicoïdale sont situés dans la buse (20).

4. Installation de lavage (8) selon l'une quelconque des revendications précédentes, dans laquelle les moyens (12) propres à créer un mouvement de rotation hélicoïdale comportent un profil en hélice (34) situé sur une paroi interne (36) d'un conduit de passage (30) du liquide de nettoyage.

5. Installation de lavage (8) selon la revendication 4, dans laquelle les moyens (12) propres à créer un mouvement de rotation hélicoïdale comportent plusieurs profils en hélice (34) répartis sur une circonférence (40) de la paroi interne (36) du conduit de passage (30) du liquide de nettoyage.

6. Installation de lavage (8) selon l'une quelconque des revendications précédentes, dans laquelle les moyens (12) propres à créer un mouvement de rotation hélicoïdale comprennent au moins une aube (54).

7. Installation de lavage (8) selon l'une quelconque des revendications précédentes, dans laquelle le portique (10) supporte plusieurs buses (20) espacées longitudinalement entre elles.

8. Installation de lavage (8) selon la revendication 7, dans laquelle les moyens (12) propres à créer un mouvement de rotation hélicoïdale sont agencés de sorte que les sens de rotation du liquide de nettoyage en sortie de chaque buse (20) sont alternés entre les buses (20) adjacentes.

9. Installation de lavage (8) selon l'une quelconque des revendications précédentes, dans laquelle elle comprend des moyens de mise en rotation de la buse (20) autour d'un axe perpendiculaire à l'axe longitudinal du portique (10) et excentré par rapport à l'axe de la buse (20).

## Patentansprüche

1. Waschanlage (8) für ein Fahrzeug (4), umfassend:
- mindestens eine Säulenanordnung (10), die einen Weg (6) für das Fahrzeug (4) begrenzt,
- mindestens eine Düse (20), die von der Säulenanordnung (10) getragen wird und vorgesehen ist, eine Reinigungsflüssigkeit auf das Fahrzeug (4) zu projizieren und
- Mittel (12), die geeignet sind, eine spiralförmige Drehbewegung der Reinigungsflüssigkeit in Bezug auf die Säulenanordnung (10) zu erzeugen,
**dadurch gekennzeichnet, dass** die zur Erzeugung einer spiralförmigen Drehbewegung geeigneten Mittel (12) angepasst sind, die Drehung der Reinigungsflüssigkeit um die Achse des die Düsen (20) verlassenden Reinigungsflüssigkeitsstrom sicherzustellen.

2. Waschanlage (8) nach Anspruch 1, bei der die zur Erzeugung einer spiralförmigen Drehbewegung geeigneten Mittel (12) in einem Durchgangskanal (30) der Reinigungsflüssigkeit angeordnet sind.

3. Waschanlage (8) nach Anspruch 1 oder 2, bei der die zur Erzeugung einer spiralförmigen Drehbewegung geeigneten Mittel (12) in der Düse (20) angeordnet sind.

4. Waschanlage (8) nach einem beliebigen der vorhergehenden Ansprüche, bei der die zur Erzeugung einer spiralförmigen Drehbewegung geeigneten Mittel (12) ein Spiralprofil (34) aufweisen, das an der Innenwand (36) eines Durchgangskanals (30) der Reinigungsflüssigkeit angeordnet ist.

5. Waschanlage (8) nach Anspruch 4, bei dem die zur Erzeugung einer spiralförmigen Drehbewegung geeigneten Mittel (12) mehrere Spiralprofile (34 aufweisen, die an einem Umfang (40) der Innenwand (36) des Durchgangskanals (30) der Reinigungsflüssigkeit verteilt sind.

6. Waschanlage (8) nach einem beliebigen der vorhergehenden Ansprüche, bei der die zur Erzeugung einer spiralförmigen Drehbewegung geeigneten Mittel (12) mindestens ein Schaufelblatt (54) umfassen.

7. Waschanlage (8) nach einem beliebigen der vorhergehenden Ansprüche, bei der die Säulenanordnung (10) mehrere Düsen (20) trägt, die untereinander in Längsrichtung beabstandet sind.

8. Waschanlage (8) nach Anspruch 7, bei der die zur Erzeugung einer spiralförmigen Drehbewegung geeigneten Mittel (12) derart angeordnet sind, dass die Drehrichtungen der Reinigungsflüssigkeit am Ausgang jeder Düse (20) zwischen benachbarten Düsen (20) wechseln.

9. Waschanlage (8) nach einem beliebigen der vorhergehenden Ansprüche, bei der sie Mittel zum Versetzen der Düse (20) in Drehung um eine Achse senkrecht zur Längsachse der Säulenanordnung (10) und exzentrisch in Bezug auf die Düsenachse (20) umfasst.

## Claims

1. Washing equipment (8) for a vehicle (4), comprising:
- at least one gantry (10) defining a track (6) for the vehicle (4),
- at least one nozzle (20) supported by the gantry (10) and intended to spray a cleaning liquid on the vehicle (4), and
- means (12) able to create a helical rotational movement of the cleaning liquid relative to the gantry (10),
**characterized in that** the means (12) able to create a helical rotational movement are suitable for ensuring the rotation of the cleaning liquid around the axis of the stream of cleaning liquid leaving the nozzle (20).

2. The washing equipment (8) according to claim 1, wherein the means (12) able to create a helical rotational movement are situated in a pipe for passage (30) of the cleaning liquid.

3. The washing equipment (8) according to claim 1 or 2, wherein the means (12) able to create a helical rotational movement are situated in the nozzle (20).

4. The washing equipment (8) according to any one of the preceding claims, wherein the means (12) able to create a helical rotational movement include a helical profile (34) situated on an inner wall (36) of a passage pipe (30) for the cleaning liquid.

5. The washing equipment (8) according to claim 4, wherein the means (12) able to create a helical rotational movement include several helical profiles (34) distributed over a circumference (40) of the inner wall (36) of the pipe (30) for passage of the cleaning liquid.

6. The washing equipment (8) according to any one of the preceding claims, wherein the means (12) able to create a helical rotational movement comprise at least one vane (54).

7. The washing equipment (8) according to any one of the preceding claims, wherein the gantry (10) supports several nozzles (20) spaced longitudinally apart from one another.

8. The washing equipment (8) according to claim 7, wherein the means (12) able to create a helical rotational movement are arranged so that the rotation direction of the cleaning liquid leaving each nozzle (20) alternates between the adjacent nozzles (20).

9. The washing equipment (8) according to any one of the preceding claims, wherein it comprises means for rotating the nozzle around an axis perpendicular to the longitudinal axis of the gantry (10) and off-centered relative to the axis of the nozzle (20).
